(19) Europäisches Patentamt
European Patent Office
Office européen des brevets

(11) **EP 3 139 013 B1**

(12) **EUROPÄISCHE PATENTSCHRIFT**

(45) Veröffentlichungstag und Bekanntmachung des Hinweises auf die Patenterteilung:
**12.09.2018   Patentblatt 2018/37**

(51) Int Cl.:
*F01N 11/00* (2006.01)          *F01N 3/20* (2006.01)
*B01D 53/94* (2006.01)

(21) Anmeldenummer: **16180489.3**

(22) Anmeldetag: **21.07.2016**

(54) **VERFAHREN ZUM BETRIEB EINER ABGASREINIGUNGSANLAGE**

METHOD FOR OPERATING AN EXHAUST GAS PURIFICATION DEVICE

PROCEDE DE FONCTIONNEMENT D'UNE INSTALLATION D'EPURATION DE GAZ D'ECHAPPEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.09.2015   DE 102015216656**

(43) Veröffentlichungstag der Anmeldung:
**08.03.2017   Patentblatt 2017/10**

(73) Patentinhaber: **Bayerische Motoren Werke Aktiengesellschaft**
**80809 München (DE)**

(72) Erfinder:
• **Bruene, Hans-Juergen**
  **3350 Haag (AT)**
• **Hirth, Roland**
  **4050 Traun (AT)**
• **Kobald, Jakob**
  **8422 Sankt Nikolai (AT)**
• **Schausberger, Bernhard**
  **4841 Ungenach (AT)**
• **Weiss, Gerhard**
  **4407 Gleink (AT)**

(56) Entgegenhaltungen:
**EP-A1- 2 025 388          EP-A1- 2 295 750**
**DE-A1-102006 027 357      DE-A1-102007 040 439**
**DE-A1-102009 058 089      DE-A1-102011 086 625**
**US-A1- 2009 272 101**

**Beschreibung**

Die Erfindung betrifft ein Verfahren zum Betrieb einer Abgasreinigungsanlage mit den Merkmalen aus dem kennzeichnenden Teil des Patentanspruchs 1 sowie eine Brennkraftmaschine mit einer erfindungsgemäßen Abgasreinigungsanlage gemäß Patentanspruch 3.

Der Begriff selektive katalytische Reduktion (Englisch: selective catalytic reduction, SCR) bezeichnet eine Technik zur Reduzierung von Stickoxiden in Abgasen von Feuerungsanlagen, Müllverbrennungsanlagen, Industrieanlagen und insbesondere Verbrennungsmotoren. Die chemische Reaktion am SCR-Katalysator ist selektiv, d. h. dass bevorzugte Stickoxide ($NO$, $NO_2$) reduziert werden, während unerwünschte Nebenreaktionen mit Oxidation von Schwefeldioxid zu Schwefeltrioxid weitgehend unterdrückt werden. Für die selektive katalytische Reduktion wird Ammoniak ($NH_3$) benötigt, das dem Abgas zugemischt wird. Die unschädlichen Endprodukte der Reaktion sind Wasser ($H_2O$) und Stickstoff ($N_2$).

Im Kraftfahrzeugbau wird das SCR-Verfahren angewendet, um insbesondere bei Dieselfahrzeugen die Stickoxidemissionen zu senken. Das für die selektive katalytische Reaktion benötigte Ammoniak wird nicht direkt, d.h. in reiner Form, verwendet, sondern aus der Reaktion einer 32,5%, wässrigen Harnstofflösung, von der Industrie einheitlich mit AdBlue® bezeichnet, gewonnen. Die wässrige Lösung wird vor dem SCR-Katalysator in den Abgasstrang, z. B. mittels eines Injektors, eingespritzt. Aus der Harnstoffwasserlösung ent-stehen durch eine Hydrolyse Reaktion Ammoniak und $CO_2$. Das derart erzeugte Ammoniak kann in einem speziellen SCR-Katalysator bei entsprechender Temperatur mit den Stickoxiden im Abgas reagieren. Die Menge des eingespritzten Harnstoffs ist von der verbrennungsmotorischen Stickoxidemission und damit von der momentanen Drehzahl und dem aktuell abgegebenen Drehmoment der Brennkraftmaschine abhängig. Der Verbrauch an Harnstoffwasserlösung beträgt abhängig von der Rohemission der Brennkraftmaschine etwa 2 bis 8 % der Menge des verbrannten Dieselkraftstoffs. Das AdBlue® muss deshalb in einem entsprechenden Tank in dem Fahrzeug mitgeführt werden. Zur Erzielung hoher $NO_x$-Reduzierungsraten ist es wichtig, dass AdBlue® im richtigen Verhältnis zur Stickoxidemission der Brennkraftmaschine dosiert wird. Da SCR-Katalysatoren bis zu einer gewissen Grenze $NH_3$ speichern können, muss die Dosierung im Durchschnitt der $NO_x$ Emissionen entsprechen. Ist die Dosierung zu gering, so sinkt der Wirkungsgrad der Stickoxidumwandlung, wird zu viel Harnstoff zu dem Abgas dosiert, so kann das daraus zu viel erzeugte Ammoniak nicht mit $NO_x$ reagieren und mit dem Abgas in die Umgebung gelangen. Da Ammoniak einen stechenden Geruch hat und bereits in sehr kleinen Konzentrationen olfaktorisch wahrgenommen wird, führt dies bei einer Überdosierung zu einer unangenehmen Geruchbelästigung. Eine Abhilfemaßnahme ist beispielsweise, hinter dem SCR-Katalysator einen Oxidationskatalysator anzuordnen. Dieser wandelt im Fall einer Ammoniaküberdosierung das $NH_3$ wieder in Stickstoff und Wasser um. Eine weitere Möglichkeit, den sogenannten Ammoniakschlupf zu verhindern, ist eine größere Auslegung des Katalysators, um damit eine bessere $NH_3$ Speicherfunktion zu erhalten. Dies verteuert jedoch die Abgasanlage erheblich und benötigt mehr Bauraum.

Mit dieser Ammoniakspeichercharakteristik des SCR-Katalysators beschäftigt sich beispielsweise die deutsche Veröffentlichung DE 11 2009 000 968 T5.

Im realen Fahrbetrieb mit einem verbrennungsmotorisch angetriebenen Kraftfahrzeug muss immer mit einer Beschleunigung und damit mit einer schlagartigen Lasterhöhung gerechnet werden. Die mit der Lasterhöhung einhergehende Temperaturerhöhung im SCR-Katalysator aufgrund der höheren Abgastemperatur, hat ein Absinken des $NH_3$-Speichervermögens zur Folge. Da ein $NH_3$-Schlupf, wie oben dargestellt, unbedingt zu vermeiden ist, muss der $NH_3$-Füllstand im SCR-Katalysator somit über die Dosiermenge in Abhängigkeit von der Katalysatortemperatur gesteuert werden. Im heutigen Serieneinsatz von Kraftfahrzeugen werden die Füllstandsmodelle in den Steuergeräten eher konservativ mit Zahlen belegt, was zur Folge hat, dass der $NH_3$-Soll-Füllstand bei hohen Temperaturen auf ein relativ niedriges Niveau abgesenkt wird. Während des Betriebs des Kraftfahrzeugs über ein einen längeren Zeitraum kann es zu einer Abweichung zwischen dem im Füllstandsmodell berechneten Ist-Füllstand und der tatsächlich im SCR-Katalysator gespeicherten Menge an $NH_3$ kommen. Der Grund dafür kann unter anderem der Drift der Dosiermenge von AdBlue® über die Laufzeit durch mechanischen Verschleiß des Dosiermoduls und der zu ungenauen Berechnung des Oxidationsanteils der dosierten Harnstoffwasserlösungsmenge oder in der Abweichung des tatsächlichen Wirkungsgrads des SCR-Katalysators liegen. Diese Abweichungen sind gerade bei hohen Katalysatortemperaturen kritisch, da das Füllstandsniveau mit $NH_3$ durch die Applikation hier bereits sehr niedrig ist. Kommt es dazu, dass der berechnete Füllstand höher als der Soll-Füllstand ist, wird der Füllstand im Katalysator durch eine Reduzierung der Dosiermenge des Reduktionsmittels abgesenkt. Durch diese Absenkung kann es dazu kommen, dass der reale $NH_3$-Füllstand gegen "null" geht. Das wiederum hat zur Folge, dass der $NO_x$-Umsatz einbricht und die Stickoxidemissionen in Folge steigen.

Bezüglich der Regelung des SCR-Katalysators und des $NH_3$-Füllstands sind die z.B. die Dokumente EP2295750, EP2025388 oder DE102011086625 relevant. Aufgabe der vorliegenden Erfindung ist es, das tatsächliche $NH_3$-Füllstandsniveau in einem SCR-Katalysator beim Betrieb einer Brennkraftmaschine zu bestimmen und die $NH_3$-Emissionen zu reduzieren.

Diese Aufgabe wird verfahrensmäßig durch die Merkmale im kennzeichnenden Teil des Patentanspruchs 1 und vorrichtungsmäßig durch die Merkmale im kennzeichnenden Teil des Patentanspruchs 3 gelöst.

Um einen möglichst hohen NOx-Umsatz in allen Betriebsbereichen zu gewährleisten, ist der Abgleich des Füllstandsmodells im Steuergerät mit der Realität in gewissen Abständen notwendig, um so ein "Verlernen" des Füllstandsmodells über eine längere Laufzeit zu verhindern. Da der aktuelle $NH_3$-Füllstand (FS) im SCR-Katalysator nicht sichtbar ist, kann ein Abgleich nur bei 0 % Füllstand (leerer SCR-Katalysator, die $NO_x$-Emission nach dem SCR-Katalysator entspricht der $NO_x$-Rohemission) bzw. bei 100% Füllstand (überfüllen des SCR-Katalysators mit Reduktionsmittel, bis $NH_3$-Schlupf erkannt wird) erfolgen. Da ein Entleeren des SCR-Katalysators hohe $NO_x$-Emissionen zur Folge hätte und somit kontraproduktiv für die Erreichung der Emissionsziele wäre, ist nur der Abgleich durch ein gezieltes, kurzzeitiges Überschreiten der Schlupfgrenze des SCR-Katalysators sinnvoll. Eine Funktion zum Abgleich des Füllstandsmodells stellt somit den Kern der Erfindung dar.

Da bei Temperaturen unterhalb von 350°C bereits sehr gute Wirkungsgrade mit dem heute bestehenden Füllstandsmodell erreicht werden, wurde der Übergang zum Einsatzbereich der Schlupferkennungsfunktion bei eben dieser bevorzugten Temperatur gewählt. Wird der Temperaturschwellwert von 350°C überschritten, wird die Dosiermenge für die wässrige Harnstofflösung sprunghaft so weit erhöht, dass der maximale $NH_3$-Füllstand des Katalysators innerhalb kürzester Zeit erreicht wird. Dadurch tritt unmittelbar nach dem Erreichen des maximalen Füllstandes bereits $NH_3$ aus dem SCR-Katalysator aus. Dieser sogenannte $NH_3$-Schlupf wird von einem $NH_3$-Sensor, der nach dem SCR-Katalysator verbaut ist, detektiert. Da ein Austreten von Ammoniak an die Umgebung unter allen Umständen vermieden werden muss, ist in Strömungsrichtung des Abgases hinter dem $NH_3$-Sensor ein zweiter SCR-Katalysator oder ein ASC-Katalysator (Ammonia Slip Catalyst) verbaut. Dieser dient dazu, den auftretenden $NH_3$-Schlupf aufzufangen bzw. abzubauen. Wird nun eine ausreichend hohe $NH_3$-Konzentration vom $NH_3$-Sensor gemessen, so kann von einem $NH_3$-Schlupf auf der gesamten Katalysatoraustrittsfläche und somit von einem vollständig befüllten Katalysator ausgegangen werden. In diesem Zeitpunkt erfolgt die Korrektur des Füllstandsmodells im Steuergerät durch Überschreiben des aktuell berechneten $NH_3$-Füllstands durch den maximalen Füllstand (bei der aktuellen SCR-Katalysatortemperatur) in Abhängigkeit des Alterungszustandes des SCR-Gesamtsystems. Diese Korrektur wird in regelmäßigen Abständen, z. B. nach einer definierten durch den $NO_x$-Katalysator geströmten $NO_x$-Masse, in Beschleunigungsphasen, in denen hohe Katalysatortemperaturen erreicht werden, durchgeführt.

Im Folgenden ist die Erfindung anhand von vier Figuren näher erläutert.

Figur 1    zeigt eine Aufsicht auf eine erfindungsgemäße Abgasreinigungsanlage.

Figur 2    zeigt in einem Diagramm die Speicherfähigkeit von Ammoniak ($NH_3$) eines SCR-Katalysators über die Temperatur.

Figur 3    zeigt schematisch eine Abgasreinigungsanlage zur Durchführung des erfindungsgemäßen Verfahrens.

Figur 4    zeigt in einem Diagramm graphisch den Verlauf des erfindungsgemäßen Verfahrens.

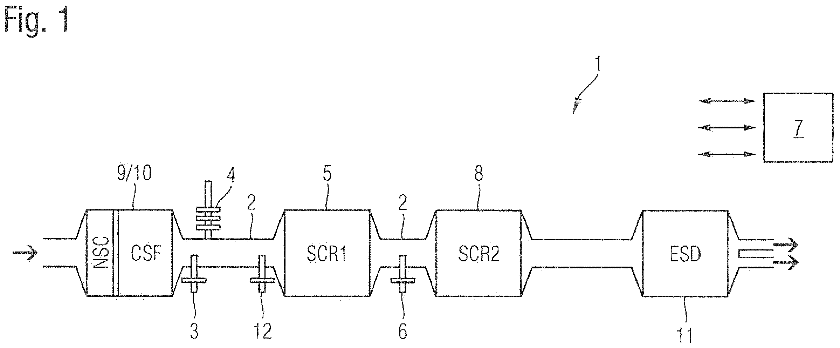

Im Folgenden gelten in den Figuren 1 bis 4 für gleiche Bauelemente die gleichen Bezugsziffern.

Figur 1 zeigt eine Aufsicht auf eine erfindungsgemäße Abgasreinigungsanlage 1 mit einem Abgasstrang 2 für eine nicht dargestellte Brennkraftmaschine.

Im Abgasstrang 2 sind in Strömungsrichtung eines Abgases der Brennkraftmaschine folgende Komponenten integriert, wobei die Strömungsrichtung des Abgases durch einen Pfeil am Abgasstrangeingang durch zwei Pfeile am Abgasstrangausgang schematisch dargestellt ist.

In den Abgasstrang 2 sind somit ein $NO_x$-Sensor 3, eine Einbringvorrichtung 4 zur Einbringung eines Reduktionsmittels (AdBlue®) in den Abgasstrang 2 sowie ein SCR-Katalysator 5 (selective catalytic reduction) und ein weiterer $NH_3$-Sensor 6 integriert. Ein Temperatur-Sensor 12 ist zur Messung der Abgastemperatur vorgesehen. Ein separates Steuergerät 7 dient zur Auswertung und/oder Steuerung von zumindest einem $NO_x$-Sensorsignal, einem Reduktionsmittelsensorsignal eines Abgastemperatursensorsignals, wobei das Steuergerät 7 in diesem Ausführungsbeispiel über ein integriertes $NH_3$-Füllstandsmodell verfügt. Elektrische Ein- und Ausgänge des Steuergerätes 7 sind schematisch durch Doppelpfeile dargestellt.

Weiter ist in diesem bevorzugten Ausführungsbeispiel in Strömungsrichtung des Abgases hinter dem SCR-Katalysator 5 ein zweiter SCR-Katalysator 7 bzw. ein ASC-Katalysator (Ammonia Slip Catalyst) in der Abgasanlage angeordnet. Weiter sind im Abgasstrang 2 in Strömungsrichtung des Abgases vor dem SCR-Katalysator 7 ein NSC-Katalysator 8 und ein DOC-Katalysator sowie ein Partikelfilter 9 angeordnet. Weiter weist die Abgasreinigungsanlage 1 im Bereich eines Abgasaustritts auch einen Schalldämpfer 11 auf.

Zusammengefasst kann gesagt werden, in Abbildung 1 ist eine Serienabgasanlage mit SCR-Katalysator 5 am Unterboden des Kraftfahrzeuges dargestellt. Nach dem gemeinsamen Canning für NSC ($NO_x$-Speicher-Katalysator), bzw. DOC (Diesel-Oxidations-Katalysator) und DPF10 (Diesel-Partikel-Filter) ist der $NO_x$-Sensor 3 verbaut, welcher zur Bestimmung des $NO_x$-Massenstroms vor dem SCR-Katalysator 5 dient. Die Dosierung des Reduktionsmittels erfolgt durch das Dosiermodul 4 in Verbindung mit dem separaten Steuergerät 7 in den Abgasstrang 2. Die mittlere Katalysatortemperatur wird über den Temperatursensor 12 ermittelt. Zur Bestimmung des $NO_x$-Massenstroms nach dem SCR-Katalysator 5 und damit auch des SCR-Wirkungsgrades dient der $NO_x$-Sensor 3 nach dem SCR-Katalysator 5.

Allgemeine Wirkungsweise:

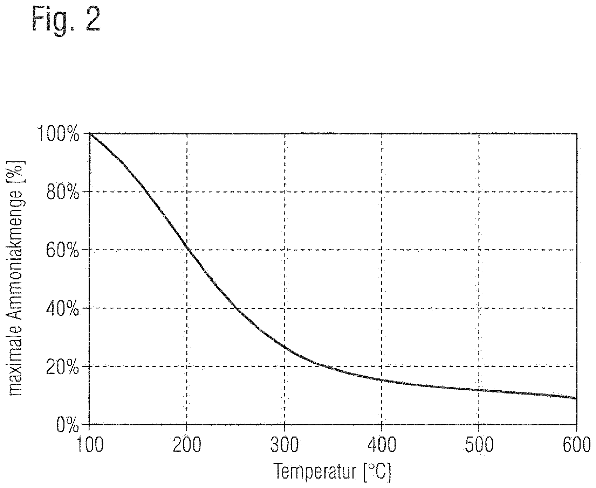

SCR-Katalysatoren lagern bei einer überstöchiometrischen Dosierung des Reduktionsmittels (Harnstoffwasserlösung, AdBlue®) eine mit steigender Temperatur geringer werdende Menge an $NH_3$ auf ihrer Beschichtung ein (siehe Figur 2), insbesondere SCR-Katalysatoren auf Kupferzeolithbasis. Dieser $NH_3$-Füllstand hat ein einen großen Einfluss auf den Wirkungsgrad des SCR-Katalysators, kann aber messtechnisch derzeit nicht erfasst werden. Die Berechnung des $NH_3$-Füllstandes erfolgt daher in einem, in dem Steuergerät 7 hinterlegten Modell über die Massenbilanz am SCR-Katalysator 5. Der $NH_3$-Füllstand des SCR-Katalysators 5 m_NH3Ld berechnet sich aus dem Intergral über die eingespritzte Menge an $NH_3$ dm_NH3inj abzüglich der zugesetzten $NH_3$ Menge dm_NH3conv sowie der oxidierten $NH_3$ Menge dm_NH3oxi.

$$m\_NH3Ld = \int (dm\_NH3inj - dm\_NH3conv - dm\_NH3oxi)dt$$

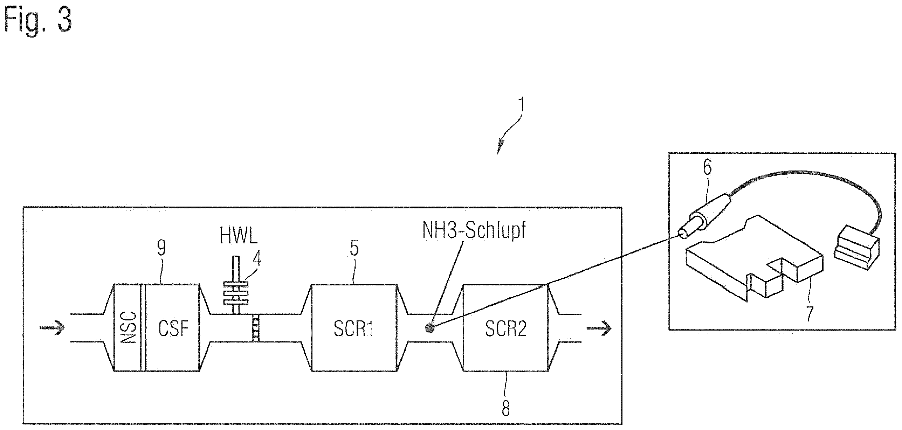

Dieser Zusammenhang ist schematisch in Figur 3 dargestellt.

Um einen möglichst hohen NOx-Umsatz in allen Betriebsbereichen zu gewährleisten, ist der Abgleich des Füllstandsmodells im Steuergerät 7 (Berechnungsformel siehe oben) mit der Realität in gewissen Abständen notwendig, um so ein "Verlernen" des Füllstandsmodells über eine längere Laufzeit zu verhindern. Da der aktuelle $NH_3$-Füllstand im SCR-Katalysator 5 nicht sichtbar ist, kann ein Abgleich nur bei 0 % Füllstand (leerer SCR-Katalysator 5, die $NO_x$-Emission nach dem SCR-Katalysator 5 entspricht der $NO_x$-Rohemission) bzw. bei 100% Füllstand (überfüllen des SCR-Katalysators 5 mit Reduktionsmittel, bis $NH_3$-Schlupf erkannt wird) erfolgen. Da ein Entleeren des SCR-Katalysators 5 hohe $NO_x$-Emissionen zur Folge hätte und somit kontraproduktiv für die Erreichung der Emissionsziele wäre, ist nur der Abgleich durch ein gezieltes, kurzzeitiges Überschreiten der Schlupfgrenze des SCR-Katalysators 5 sinnvoll.

Eine Funktion zum Abgleich des Füllstandsmodells stellt somit den Kern der Erfindung dar.

Da bei Temperaturen unterhalb von 300° bis 400°, insbesondere unterhalb von 350°C bereits sehr gute Wirkungsgrade mit dem heute bestehenden Füllstandsmodell erreicht werden, wurde der Übergang zum Einsatzbereich der Schlupferkennungsfunktion bei eben dieser bevorzugten Temperatur gewählt. Wird der Temperaturschwellwert von beispielsweise 350°C überschritten, wird die Dosiermenge für die wässrige Harnstofflösung (AdBlue ®) sprunghaft so weit erhöht, dass der maximale $NH_3$-Füllstand des SCR-Katalysators 5 innerhalb kürzester Zeit erreicht wird. Dadurch tritt unmittelbar nach dem Erreichen des maximalen Füllstandes bereits $NH_3$ aus dem SCR-Katalysator 5 aus. Dieser sogenannte $NH_3$-Schlupf wird von einem $NH_3$-Sensor 6, der in Strömungsrichtung des Abgases nach dem SCR-Katalysator 5 verbaut ist, detektiert. Da ein Austreten von Ammoniak an die Umgebung unter allen Umständen vermieden werden muss, ist in Strömungsrichtung des Abgases hinter dem $NH_3$-Sensor 6 ein zweiter SCR-Katalysator 8 oder ein ASC-Katalysator (Ammonia Slip Catalyst) verbaut. Dieser dient dazu, den auftretenden $NH_3$-Schlupf aufzufangen bzw. abzubauen. Wird nun eine ausreichend hohe $NH_3$-Konzentration vom $NH_3$-Sensor 6 gemessen, so kann von einem $NH_3$-Schlupf auf der gesamten Katalysatoraustrittsfläche und somit von einem vollständig befüllten SCR-Katalysator 5 ausgegangen werden. In diesem Zeitpunkt erfolgt die Korrektur des Füllstandsmodells im Steuergerät 7 durch Überschreiben des aktuell berechneten $NH_3$-Füllstands durch den maximalen Füllstand (bei der aktuellen SCR-Katalysatortemperatur) in Abhängigkeit des Alterungszustandes des SCR-Gesamtsystems. Diese Korrektur wird in regelmäßigen Abständen, z. B. nach einer definierten durch den SCR-Katalysator geströmten $NO_x$-Masse, in Beschleunigungsphasen, in denen hohe Katalysatortemperaturen erreicht werden, durchgeführt.

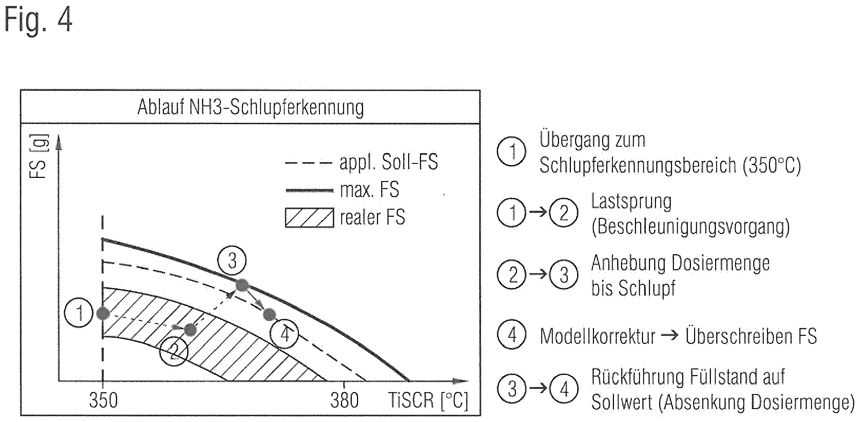

Somit ergeben sich folgende, in Figur 4 grafisch dargestellte Verfahrensschritte:

- Messen der Abgastemperatur,
- Bei Überschreiten einer definierten Temperatur vergrößern einer Reduktionsmitteleinbringmenge in den Abgasstrang 2, bis der $NH_3$-Sensor 6 $NH_3$-Schlupf detektiert,
- Korrektur des Füllstandsmodells durch Überschreiben des aktuell berechneten $NH_3$-Füllstandes des SCR-Katalysators 5 durch den maximalen Füllstand bei der aktuellen Temperatur,
- Verringern der Reduktionsmitteleinbringmenge.

Somit ergeben sich zusammengefasst folgende Vorteile für den Betrieb des SCR-Systems durch den Einsatz der Schlupferkennungsfunktion:

- Abgleich des NH$_3$-Füllstandsmodells in regelmäßigen Abständen, um ein "Verlernen" des Füllstandsmodells und damit verbundenes, ungewolltes Entleeren des Katalysators (was erhöhte NO$_x$ -Emissionen zur Folge hat) zu verhindern.
- Aufgrund des zweiten, hinter dem NH$_3$-Sensor 6 angeordneten Schlupfkatalysators (SCR-Katalysator oder ASC-Katalysator) kann ein gewisser NH$_3$-Schlupf nach dem SCR-Katalysator 5 zugelassen werden.
- Dadurch kann der SCR-Katalysator 5 weiter in seinem maximalen Füllstand betrieben werden, wodurch das eingesetzte Katalysatorvolumen in vorteilhafter Weise verringert werden kann.
- Dadurch ergeben sich wiederum Vorteile hinsichtlich dem Abgasgegendruck.

**Bezugszeichenliste:**

1. Abgasreinigungsanlage
2. Abgasstrang
3. NOx-Sensor
4. Einbringvorrichtung
5. SCR-Katalysator
6. NH$_3$-Sensor
7. Steuergerät
8. zweiter SCR-Katalysator
9. NSC-Katalysator
10. Partikelfilter
11. Schalldämpfer
12. Temperatur-Sensor

**Patentansprüche**

1. Verfahren zum Betrieb einer Abgasreinigungsanlage (1) in einem Abgasstrang (2) für eine Brennkraftmaschine, wobei die Abgasreinigungsanlage (1) in Strömungsrichtung eines Abgases der Brennkraftmaschine zumindest folgende Komponenten aufweist:

   Einen NO$_x$-Sensor (3), der ein NO$_x$-Signal ausgibt, eine Einbringvorrichtung (4) zur Einbringung eines Reduktionsmittels in den Abgasstrang (2), einen Temperatur-Sensor (12), der ein TemperaturSignal ausgibt, einen SCR-Katalysator (5) (selektive catalytic reduction) und einen NH$_3$-Sensor (6), der ein NH$_3$-Signal ausgibt und einen zweiten SCR-Katalysator (8) und/oder einen ASC-Katalysator (ammonia slip catalyst), sowie einem separatem Steuergerät (7) zur Auswertung und/oder Steuerung von zumindest einem NO$_x$-Sensorsignal, einem Reduktionsmittel-Sensorsignal und eines Abgastemperatur-Sensorsignales, wobei das Steuergerät (7) über ein Füllstandsmodell des SCR-Katalysators (5) verfügt,
   **gekennzeichnet durch** folgende Verfahrensschritte, die in regelmäßigen Abständen durchgeführt werden:

   - Messen der Abgastemperatur;
   - Bei Überschreiten einer definierten Temperatur und nach einer definierten durch den SCR-Katalysator geströmten NO$_x$-Masse durch ein gezieltes, kurzzeitiges Überschreiten der Schlupfgrenze des SCR-Katalysators (5) ein sprunghaftes Vergrößern einer Reduktionsmitteleinbringmenge in den Abgasstrang (2), bis der NH$_3$-Sensor (6) NH$_3$-Schlupf detektiert;
   - Korrektur des Füllstandsmodells durch Überschreiben des aktuell berechneten NH$_3$-Füllstandes des SCR-Katalysators (5) durch den Maximal-Füllstand bei der aktuellen Temperatur;
   - Verringern der Reduktionsmitteleinbringmenge.

2. Verfahren nach Patentanspruch 1,
   **dadurch gekennzeichnet, dass** die definierte Temperatur zwischen 300°C und 400°C, bevorzugt bei etwa 350°C liegt.

3. Brennkraftmaschine zur Durchführung der Verfahren nach Patentanspruch 1 oder 2,
   **dadurch gekennzeichnet, dass** in Strömungsrichtung des Abgases vor dem SCR-Katalysator (8) ein NSC-Katalysator (9) und/oder ein DOC-Katalysator und/oder ein Partikelfilter (10) in der Abgasreinigungsanlage (1) angeordnet ist.

## Claims

**1.** A method for operating an emission control system (1) in an exhaust-system branch (2) for an internal combustion engine, wherein the emission control system (1) has at least the following components in the direction of flow of an exhaust of the internal combustion engine:

an NO$_x$ sensor (3) which emits an NO$_x$ signal, an introduction device (4) for introducing a reducing agent into the exhaust-system branch (2), a temperature sensor (12) which emits a temperature signal, an SCR catalyst (5) (selective catalytic reduction) and an NH$_3$ sensor (6) which emits an NH$_3$ signal and a second SCR catalyst (8) and/or an ASC catalyst (ammonia slip catalyst), and also a separate control unit(7) for evaluating and/or controlling at least one NO$_x$ sensor signal, a reducing-agent sensor signal and an exhaust-gas temperature sensor signal, wherein the control unit(7) has a filling-level model of the SCR catalyst(5),
**characterised by** the following method steps, which are carried out at regular intervals:

- measuring the exhaust temperature;
- upon exceeding a defined temperature and once a defined NO$_x$ mass has flowed through the SCR catalyst, by deliberate, brief exceeding of the slip boundary of the SCR catalyst (5), abruptly increasing an introduction amount of reducing agent in the exhaust-system branch (2) until the NH$_3$ sensor (6) detects NH$_3$ slip;
- correcting the filling-level model by overwriting the currently calculated NH$_3$ filling level of the SCR catalyst(5) by the maximum filling level at the current temperature;
- reducing the introduction amount of reducing agent.

**2.** A method according to Claim 1,
**characterised in that** the defined temperature lies between 300éC and 400éC, preferably at approximately 350éC.

**3.** An internal combustion engine for carrying out the method according to Claim 1 or Claim 2,
**characterised in that** an NSC catalyst (9) and/or a DOC catalyst and/or a particle filter (10) is arranged in the emission control system (1) in the direction of flow of the exhaust before the SCR catalyst (8).

## Revendications

**1.** Procédé permettant de faire fonctionner une installation d'épuration des gaz d'échappement (1) de la ligne des gaz d'échappement (2) d'un moteur à combustion interne, selon lequel l'installation d'épuration des gaz d'échappement (1) comporte, dans la direction de circulation des gaz d'échappement du moteur à combustion interne, au moins les composants suivants :

un capteur de NO$_x$ (3) qui délivre un signal de NO$_x$, un dispositif d'alimentation (4) permettant de fournir un agent réducteur dans la ligne des gaz d'échappement (2), un capteur de température (12) qui délivre un signal de température, un catalyseur SCR (5) (catalyseur de réduction catalytique sélective) et un capteur de NH$_3$ (6) qui délivre un signal de NH$_3$ ainsi qu'un second catalyseur SCR (8) et/ou un catalyseur ASC (catalyseur à dégagement d'ammoniac) et un appareil de commande séparé (7) permettant d'évaluer et/ou de commander au moins le signal du capteur de NO$_x$, le signal du capteur d'agent réducteur et le signal de capteur de la température des gaz d'échappement, l'appareil de commande (7) étant équipé d'un modèle de niveau du catalyseur SCR (5),
**caractérisé en ce qu'**il comprend
les étapes de procédé suivantes mises en oeuvre à intervalles réguliers consistant à :

- mesurer la température des gaz d'échappement,
- en cas de dépassement d'une température définie et après qu'une masse de NO$_x$ définie ait circulé dans le catalyseur SCR, augmenter de façon brusque la quantité fournie d'agent réducteur dans la ligne des gaz d'échappement (2), jusqu'à ce que le capteur de NH$_3$ (6), détecte un glissement de NH$_3$,
- corriger le modèle de niveau en remplaçant le niveau de NH$_3$ calculé actuel du catalyseur SCR (5) par le niveau maximum à la température actuelle,
- diminuer la quantité d'agent réducteur fournie.

**2.** Procédé conforme à la revendication 1,
**caractérisé en ce que**
la température définie est située entre 300°C et 400°C et est de préférence égale à environ 350°C.

**3.** Moteur à combustion interne permettant la mise en oeuvre du procédé conforme à l'une des revendications 1 et 2,
**caractérisé en ce qu'**
il est prévu en amont du catalyseur SCR (8), dans la direction de circulation des gaz d'échappement, un catalyseur NSC (9) et/ou un catalyseur DOC et/ou un filtre à particules (10), dans l'installation d'épuration des gaz d'échappement (1).

Fig. 1

Fig. 2

Fig. 3

**Fig. 4**

Ablauf NH3-Schlupferkennung

FS [g]

- - - appl. Soll-FS
—— max. FS
realer FS

350          380   TiSCR [°C]

① Übergang zum Schlupferkennungsbereich (350°C)

①→② Lastsprung (Beschleunigungsvorgang)

②→③ Anhebung Dosiermenge bis Schlupf

④ Modellkorrektur → Überschreiben FS

③→④ Rückführung Füllstand auf Sollwert (Absenkung Dosiermenge)

EP 3 139 013 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112009000968 T5
- EP 2295750 A
- EP 2025388 A
- DE 102011086625